# EUROPÄISCHE PATENTSCHRIFT

(11) **EP 1 084 558 B1**
(45) Veröffentlichungstag und Bekanntmachung des Hinweises auf die Patenterteilung: **27.08.2003**
(21) Anmeldenummer: 99927855.9
(22) Anmeldetag: 02.06.1999
(51) Int. Cl.: H04M 1/72

(54) **ZUSATZVORRICHTUNG FÜR MOBILFUNKGERÄTE ZUR VERBINDUNG MIT TELEKOMMUNIKATIONSNETZEN**
SUPPLEMENTARY DEVICE FOR MOBILE RADIO DEVICES FOR CONNECTING WITH TELECOMMUNICATIONS NETWORKS
DISPOSITIF COMPLEMENTAIRE DESTINE A DES APPAREILS TELEPHONIQUES MOBILES POUR LA LIAISON AVEC DES RESEAUX DE TELECOMMUNICATION

(30) Priorität: 03.06.1998 DE 29809864 U
(43) Veröffentlichungstag der Anmeldung: 21.03.2001
(73) Patentinhaber: Fritsche, Enrico, 02625 Bautzen (DE); Wieland, Wolf Ferdinand, 93138 Lappersdorf (DE); Becker, Nickolaus, 80801 München (DE); Chaussy, Christian, 82064 Strasslach (DE)
(72) Erfinder: FRITSCHE, Enrico, D-02625 Bautzen (DE)
(74) Vertreter: Hafner, Dieter, Dr. Dipl.-Phys.
(86) Internationale Anmeldenummer: EP9903842
(87) Internationale Veröffentlichungsnummer: WO99063735

(56) Entgegenhaltungen:
- DE-A- 4 302 820
- DE-A- 19 627 287
- DE-A- 19 707 833
- US-A- 5 517 553

## Beschreibung

Die vorliegende Erfindung betrifft eine Zusatzvorrichtung für Mobilfunkgeräte. Insbesondere betrifft die vorliegende Erfindung eine Zusatzvorrichtung für ein oder mehrere Mobilfunkgeräte, wie Handys, wobei die Vorrichtung eine direkte, drahtlose, nicht über ein Festnetz geführte Verbindung, zu einem oder mehreren Mobilfunknetzen, und/oder eine direkte Einwahl in ein Festnetz erlaubt, deren Auswahl über die Zusatzvorrichtung frei bestimmbar ist.

Die Kommunikation zwischen Mobilfunkgeräten erfolgt derzeit über die von verschiedenen Firmen angebotenen drahtgebundenen Festnetze bzw. Telekommunikationsfunknetze. Zu den Festnetzen ist insbesondere das Telefonnetz der Deutschen Telekom AG zu rechnen, während bei den Telekommunikationsfunknetzen in Deutschland zur Zeit fünf unterschiedliche Netze verfügbar sind, nämlich C-Netz, D1-Netz, D2-Netz, E1-Netz und E2-Netz. Eine Anwahl des entsprechenden Telekommunikationsfunknetzes erfolgt dabei über eine dem jeweiligen Netz zugehörige, der Rufnummer vorgestellte, Netzkennzahl.

Eine Verbindung zwischen den Mobilfunkgeräten entsteht dabei entweder durch Verwendung eines den Mobilfunkgeräten beiderseits zugänglichen Telekommunikationsfunknetzes, oder aber falls die beteiligten Mobilfunkgeräte jeweils für unterschiedliche Telekommunikationsfunknetze freigeschaltet sind, unter Beteiligung eines drahtgebundenen Festnetzes. Ist beispielsweise ein Mobilfunkgerät für das D1-Netz freigeschalten, und ein weiteres für das E-Netz, dann erfolgt eine Verbindung zwischen diesen beiden Mobilfunkgeräten von dem D1-Netz in das drahtgebundene Festnetz, und dann in das E-Netz. Solch ein Verbindungsaufbau über Funk-/Fest-/Funknetz ist anfällig für technische Fehler und wegen der Beteiligung von drei unterschiedlichen Telekommunikationsnetzen mit hohen Kosten belastet. Zudem kann der Verbindungsaufbau durch den bekanntermaßen häufigen Überlastungszustand einzelner Telekonununikationsnetze schwierig sein. Telekommunikationsnetze im Sinne der Erfindung sind Mobilfunk- und Festnetze.

Neuere technische Entwicklungen, beispielsweise Dualband-Handys oder Tripleband-Handys sollen dem Anwender in dieser Hinsicht größeren Freiraum in der Auswahl der verwendeten Telekommunikationsfunknetze schaffen. Jedoch bieten diese technischen Neuentwicklungen nicht die Möglichkeit, sämtliche zur Zeit verfügbaren bzw. beliebige Telekommunikationsfunknetze anzuwählen.

Ein weiterer Vorteil gegenüber den Dualband-Handys oder Tripleband-Handys ist es, daß mittels erfindungsgemäßer Zusatzvorrichtung übliche "Single"-band-Handys einen direkten Zugang zu jedem beliebigen Telekommunikationsfunknetz, ohne Umweg über das Festnetz, erhalten. Mit anderen Worten, die erfindungsgemäße Zusatzvorrichtung macht aus einfachen "Single"-band-Handys "Multi"band-Handys. Vorteilhafterweise werden somit die Kosten für das Anschaffen von Dual- oder Tripleband-Handys vermieden, da sich die herkömmlichen "Single"band-Handys mittels Zusatzvorrichtung umrüsten lassen, ohne daß hierzu ein Eingriff in die Hardware des Handys erforderlich wird. Darüber hinaus lassen sich mit der Zusatzvorrichtung auch "Dual"-band-Handys oder "TripIe"-band-Handys zu "Multi"-band-Handys umrüsten.

Aus DE 197 07 833 A 1 ist die Verwendung von Relais-Stationen für Mobilfunktelefone zum Aufbau eines lokalen Netzes bekannt. Über die Relais-Station werden Gespräche zwischen Mobilfunktelefonen auf lokaler Basis vermittelt, ohne über ein Telekommunikationsnetz zu gehen. Die Vermittlung kann auch über mehrere Relais-Stationen hinweg erfolgen, die untereinander über Standleitungen verbunden sind. Weiterhin ermöglicht die Relais-Station die Umgehung eines Mobilfunknetzes, indem ein Verbindungswunsch zu einem anderen Mobiltelefon, welches sich nicht im Lokalbereich befindet, über das Festnetz vermittelt wird, wenn die Festnetzverbindung günstiger als die Mobilnetzverbindung ist.

Aufgabe der vorliegenden Erfindung ist es, eine Zusatzvorrichtung für Mobilfunkgeräte, wie Handys, zur Verfügung zu stellen, wobei die Vorrichtung eine direkte, drahtlose, nicht über ein Festnetz geführte Verbindung zu einem oder mehreren Telekommunikationsfunknetzen, oder eine direkte Einwahl in ein Festnetz erlaubt, deren Auswahl über die Zusatzvorrichtung frei bestimmbar ist.

Eine weitere Aufgabe der vorliegenden Erfindung ist es, die vorgenannten Nachteile des Standes der Technik zu überwinden.

Diese Aufgabe wird durch die nachstehende erfindungsgemäße Zusatzvorrichtung für ein oder mehrere Mobilfunkgeräte, wie Handys, gelöst, indem die Vorrichtung eine direkte, drahtlose, nicht über ein Festnetz geführte Verbindung zu einem oder mehreren Telekommunikationsfunknetzen, oder eine direkte Einwahl in ein Festnetz erlaubt, wobei deren Auswahl über die Zusatzvorrichtung frei bestimmbar ist, umfassend:
- eine oder mehrere Sende-/Empfangseinheiten, geeignet zur Kommunikation mit einem oder mehreren Mobilfunkgeräten, und zur Kommunikation mit einem oder mehreren unterschiedlichen Mobilfunknetzen;
- ein oder mehrere ISDN/analog Kabeltreiber, geeignet zur Kommunikation mit einem oder mehreren Mobilfunkgeräten, und zur Kommunikation mit einem oder mehreren Festnetzen;
- wenigstens einen Mikroprozessor, geeignet zur Steuerung und Kontrolle der Kommunikation der Zusatzvorrichtung mit den Mobilfunkgeräten ("interne Kommunikation") und zur Steuerung und Kontrolle der Kommunikation der Zusatzvorrichtung mit einem oder mehreren unterschiedlichen Telekommunikationsnetzen ("externe Kommunikation"); sowie
- Einrichtungen zur Programm- und Datenspeicherung;
- wenigstens einen Energiespeicher, vorzugsweise Akku- und/oder Brennstoffzelle;
- eine Aufnahmevorrichtung für die Aufnahme einer oder mehrerer SIM-Karten zur Freischaltung von ein oder mehreren Mobilfunknetzen, wobei,
- die interne Kommunikation zwischen der Zusatzvorrichtung und der (den) zugeordneten Mobilfunkgerät(en) über eine Funkverbindung und/oder Kabelverbindung erfolgt, wobei
- die Zuordnung zwischen der Zusatzvorrichtung und dem(n) Mobilfunkgerät(en) mittels festlegbaren Kommunikationscodes und/oder Funkfrequenzen erfolgt, die eine direkte Verbindung zwischen dem(n) Mobilfunkgerät(en) und dem jeweiligen Mobilfunknetz ausschließt;
- die externe Kommunikation zwischen der Zusatzvorrichtung und dem(n) Telekommunikationsfunknetz(en) über Funkverbindungen in das Mobilfunknetz und/oder Kabelverbindungen in das Festnetz erfolgt.

Hierbei ist es erfindungsgemäß vorteilhaft, daß die in der Zusatzvorrichtung verwendeten Sende-/Empfangseinheiten sowohl zur Kommunikation mit den Mobilfunkgeräten ("interne Kommunikation"), als auch zur Kommunikation mit den unterschiedlichen Telekommunikationsnetzen ("externe Kommunikation"), oder aber jeweils alternativ nur zur internen Kommunikation oder externen Kommunikation geeignet sind. Im letzteren Fall ist es vorgesehen, daß wenn die Zusatzvorrichtung mit einer Sende-/Empfangseinheit ausgestattet ist, die nur zur internen Kommunikation geeignet ist, diese wenigstens eine weitere Sende/Empfangseinheit aufweist, die dann zur externen Kommunikation, oder im umgekehrten Falle zur internen Kommunikation befähigt ist.

Zentrale Steuer- und Kontrolleinheit für die Kommunikation zwischen der Zusatzvorrichtung und den Mobilfunkgeräten bzw. den Telekommunikationsfunknetzen ist ein Mikroprozessor. Der Mikroprozessor greift dabei auf Programme und Daten zu, die in hierfür vorgesehenen Einrichtungen zur Programmund Datenspeicherung abgelegt sind.

Die für den Betrieb der Zusatzvorrichtung notwendige Energie wird einem angeschlossenen Mobilfunkgerät und/oder einem Energiespeicher des Zusatzgeräts, vorzugsweise einem Akku bzw. einer Brennstoffzelle entnommen.

Die Freischaltung von einem oder mehreren Mobilfunknetzen erfolgt durch Einstecken der jeweiligen hierfür gültigen SIM-Karten in die Aufnahmevorrichtung der Zusatzvorrichtung.

Die interne Kommunikation zwischen der Zusatzvorrichtung und den dieser Zusatzvorrichtung zugeordneten Mobilfunkgeräten erfolgt über eine Funkverbindung und/oder eine Kabelverbindung. Dabei erfolgt diese Zuordnung über einen hierfür festlegbaren Kommunikationscode und/oder Funkfrequenzen, wodurch eine direkte Verbindung zwischen den beteiligten Mobilfunkgeräten und den jeweiligen Mobilfunknetzen ausgeschlossen wird. Über den festlegbaren Kommunikationscode wird insbesondere das Übertragungsprotokoll zwischen den Mobilfunkgeräten und der Zusatzvorrichtung eingestellt. Durch eine Festlegung des internen Kommunikationscodes,die unterschiedlich zu dem jeweiligen Kommunikationscode für die externe Kommunikation ist, wird sichergestellt, daß eine direkte Verbindung zwischen den Mobilfunkgeräten und den jeweiligen Telekommunikationsfunknetzen verhindert wird.

Schließlich erfolgt eine externe Kommunikation, d.h. zwischen der Zusatzvorrichtung und den Telekommunikationsfunknetzen über Funkverbindungen in das Mobilfunknetz und/oder Kabelverbindungen in das Festnetz, wobei hierbei ein, diesen Telekommunikationsfunknetzen entsprechender, Kommunikationscode, der ungleich zu dem internen Kommunikationscode ist, verwendet wird.

Erfindungsgemäß ist es bevorzugt, daß die Funkverbindung zur internen Kommunikation zwischen der Zusatzvorrichtung und den Mobilfunkgeräten über eine Hochfrequenz- oder Infrarot-Schnittstelle erfolgt. Typische Reichweiten für eine Hochfrequenz-Funkverbindung der erfindungsgemäßen Zusatzvorrichtung liegen in der Größenordnung von 2 Kilometern auf freiem Feld.

Weiterhin ist es bevorzugt, daß der interne Kommunikationscode durch in die Zusatzvorrichtung und/oder in die Mobilfunkgeräte einsteckbare SIM-Karten, auf welchen der interne Kommunikationscode gespeichert ist, festgelegt wird. Gleichermaßen ist es bevorzugt, daß eine entsprechende Einstellung des internen Kommunikationscodes, beispielsweise über eine Einstellung bzw. eine Veränderung der in die Zusatzvorrichtung bzw. Mobilfunkgeräte integrierten Einrichtungen zur Programm- und Datenspeicherung, festgelegt wird. Wie bereits erwähnt, wird dabei durch die Festlegung des internen Kommunikationscodes ebenfalls eine direkte Verbindung der Mobilfunkgeräte in Mobilfunknetze gesperrt.

Es ist in einer weiteren Ausführungsform bevorzugt, daß der Mikroprozessor befähigt ist, denjenigen Kommunikationspfad zu ermitteln, der hinsichtlich der Kommunikationskosten optimiert ist. Dabei erfolgt die Ermittlung der Kommunikationskosten in Abhängigkeit der netzspezifischen Kostenparameter, die hierzu zuvor in den Einrichtungen zur Datenspeicherung abgelegt werden. In vorteilhafter Weise ist es dabei möglich, eine hinsichtlich der Kommunikationskosten optimierte Verbindung zwischen verschiedenen erfindungsgemäßen Zusatzvorrichtungen aufzubauen. Selbstverständlich ist im Falle einer Verbindung zwischen einer erfindungsgemäßen Zusatzvorrichtung und neueren technischen Entwicklungen, wie den Dualband-Handys oder Tripleband-Handys das kostengünstigste Telekommunikationsfunknetz unter den jeweils freigeschalteten Funknetzen bzw. Festnetz auswählbar.

Die Zusatzvorrichtung weist vorzugsweise eine oder mehrere Anschluß-/Schnittstellen zur Verbindung mit weiteren Geräten oder Geräteeinheiten, insbesondere wie einer Anzeigevorrichtung (Display), Druckvorrichtung, Computer und/oder dergleichen auf. Insbesondere ist es dabei in vorteilhafter Weise möglich, daß über die Anzeigevorrichtung auf dem Computer abgelegte Daten, beispielsweise den Rufnummern zugeordnete Inhaberdaten, angezeigt und ggf. über die Druckvorrichtung ausgedruckt werden.

Weiterhin ist es bevorzugt, daß die Zusatzvorrichtung über eine oder mehrere Anschluß-/Schnittstellen zur Verbindung mit lokalen bzw. nicht-lokalen Computernetzwerken, insbesondere Internet ausgestattet ist. Durch diesen Zugang zu den genannten Computernetzwerken kann dann in vorteilhafter Weise über ein Mobilfunkgerät auf vielerlei, z.B. im Internet, vorhandenen Informationen zugegriffen werden.

Eine weitere vorteilhafte Ausgestaltung der erfindungsgemäßen Zusatzvorrichtung sieht vor, daß diese über einen internen und/oder externen, ggf. wiederaufladbaren Stromspeicher verfügt, und/oder über die ihr zugeordneten Mobilfunkgeräte mit Strom versorgt wird.

Gleichermaßen ist es von Vorteil, wenn die Zusatzvorrichtung in eines der ihr zugeordeteten Mobilfunkgeräte und/oder Telefonanlagen integriert ist.

Ein weiteres bevorzugtes Merkmal der Erfindung ist es, daß der Mikroprozessor eine ausschließliche Kommunikation zwischen den der Zusatzvorrichtung zuordneten Mobilfunkgeräten ("interne Konferenzschaltung") ermöglicht. Diese erfolgt dann unter Ausschluß von externen Telekommunikationsnetzen, und ggf. unter ausschließlicher Verwendung des internen Kommunikationscodes. Durch den Ausschluß der externen Telekommunikationsnetze ist es hierbei in vorteilhafter Weise möglich, die ansonsten hierfür fälligen Verbindungsgebühren der externen Telekommunikationsnetze einzusparen.

Des weiteren ist es ein bevorzugtes Merkmal der erfindungsgemäßen Zusatzvorrichtung, daß der integrierte Mikroprozessor unter Verwendung des internen und externen Kommunikationscodes eine Kommunikation zwischen den der Zusatzvorrichtung zugeordneten Mobilfunkgeräten, sowie auch nicht-zugeordneten Mobilfunkgeräten ermöglicht. Dieser Zusammenschluß der beteiligten Gesprächspartner ("externe Konferenzschaltung") erlaubt es in vorteilhafter Weise, die bei herkömmlichen Konferenzschaltungen, nicht eingebundenen externen Gesprächsteilnehmer in die Konferenz miteinzubinden. Zudem können die Gespräche zwischen den der Zusatzvorrichtung zugeordneten Mobilfunkgeräte über den internen Kommunikationscode abgewickelt werden, was in erheblichem Umfang Verbindungskosten einspart. Eine externe Konferenzschaltung läßt sich auch durch den Zusammenschluß mehrerer erfindungsgemäßer Zusatzvorrichtungen aufbauen. Die Kommunikation zwischen den verschiedenen Zusatzvorrichtungen zugeordneten Mobilfunkgeräten kann dann wiederum ausschließlich über den internen Kommunikationscode erfolgen, was folglich die Verbindungskosten drastisch verringern kann.

Beispielsweise läßt sich so eine Telekommunikation innerhalb eines Unternehmens, einer Stadt oder dergleichen aufbauen, indem einzelne Mobilfunkgeräte miteinander über die erfindungsgemäße Zusatzvorrichtung(en) direkt kommunizieren.

Ein weiteres bevorzugtes Merkmal der erfindungsgemäßen Zusatzvorrichtung ist es, daß der Mikroprozessor eine Regelung der zugeordneten Mobilfunkgeräte zuläßt. Hierbei ist es insbesondere bevorzugt, wenn die dieser Zusatzvorrichtung zugeordneten Mobilfunkgeräte entsprechend einstellbarer Prioritätsvorgaben ausgewählt werden. So können z.B. ankommende Gespräche den zugeordneten Mobilfunkgeräten nacheinander zugeleitet werden. Mit anderen Worten: sollte das Mobilfunkgerät mit der höchsten Priorität nicht zum Empfang des ankommenden Gespräches bereit sein, wird dieses Gespräch daraufhin dem Mobilfunkgerät mit der nächst niedrigeren Priorität zugeleitet Dies wird dann so lange weitergeführt, bis das Mobilfunkgerät mit der niedrigsten Priorität erreicht wird. Selbstverständlich liegt es im Wissen des Fachmanns, die jeweilige Verweildauer bei den Mobilfunkgeräten, z.B. über die Anzahl der Klingelsignale, einzustellen.

Weiterhin wird es bevorzugt, daß die erfindungsgemäße Zusatzvorrichtung über deren integrierten Mikroprozessor höhere Funktionen, wie Anklopfen, Rufum- bzw. Rufweiterleitung, sowie Anrufbeantwortung ermöglicht. In besonders vorteilhafter Weise erfolgt dabei die Anrufbeantwortung direkt durch die erfindungsgemäße Zusatzvorrichtung. Im Unterschied hierzu ist es bei der Anrufbeantworterfunktion der herkömmlichen Mobilfunkgeräte notwendig, die eingegangenen Anrufe beim Mobilfunknetzbetreiber abzurufen, was zusätzliche Kosten verursacht.

Erfindungsgemäß wird es bevorzugt, wenn der Mikroprozessor den Zugriff auf die in der Zusatzvorrichtung gespeicherten Daten und Programme unter einstellbaren Zugriffsbeschränkungen ermöglicht. Beispielsweise kann die Regelung derart erfolgen, daß nur das der Zusatzvorrichtung zugeordnete Mobilfunkgerät mit der höchsten Priorität, die in der Zusatzvorrichtung gespeicherten Daten und Programme einsehen oder ggf. auch verändern darf. Für die weiteren Mobilfunkgeräte mit niedrigeren Prioritätsvorgaben ist dieser Zugriff dann gesperrt.

Ein bevorzugtes Merkmal der erfindungsgemäßen Zusatzvorrichtung sieht vor, daß der Mikroprozessor eigenständig eine Verbindung zu den Mobilfunkgeräten, Telekommunikationsnetzen und/oder lokalen oder nicht-lokalen Computernetzen herstellt. Diese Verbindung kann dann insbesondere zur Übertragung und Speicherung von Daten erfolgen. Dabei ist es besonders vorteilhaft, wenn eine Verbindung in das Internet erstellt wird. Beispielsweise können regelmäßig Wirtschaftsdaten, wie Börsenkurse, Dax-Wert usw. abgefragt werden.

In einer weiteren Ausführungsform ist die erfindungsgemäße Zusatzvorrichtung in Form einer Steckkarte, geeignet zum Einsetzen in Computer, ausgebildet.

Weiterhin wird es bevorzugt, wenn die Zusatzvorrichtung eine Freisprech-Einrichtung aufweist. Diese kann dann besonders vorteilhaft verwendet werden, wenn der Verwender mit anderen manuellen Tätigkeiten beschäftigt ist. Beispielsweise kann bei Verwendung der Zusatzvorrichtung in Automobilen, die Freisprech-Einrichtung eine Kommunikation ohne Unterbrechung der Fahrt ermöglichen. Gleichzeitig brauchen wegen der mobilen Mitführbarkeit generell keine Kabelvorrichtungen angeschafft zu werden.

Bei der Verwendung der Zusatzvorrichtung ist es durchaus denkbar, daß die Verbindung zwischen der Zusatzvorrichtung und den dieser zugeordneten Mobilfunkgeräten unterbrochen wird. Dies kann z.B. dadurch geschehen, daß die Distanz, vor allem in städtischen Bereichen, zwischen der Zusatzvorrichtung und den Mobilfunkgeräten so groß wird, daß die zur Kommunikation verwendeten Funksignale, etwa-durch Gebäude zu stark abgeschirmt werden. In diesem Fall ist es von Vorteil, daß der Mikroprozessor eine automatische Abkopplung des Mobilfunkgerätes von der Zusatzvorrichtung erlaubt. Hierbei wird dann eine direkte Verbindung des abgekoppelten Mobilfunkgerätes in das Mobilfunknetz ermöglicht. Die direkte Verbindung in das Mobilfunknetz kann dabei über eine, auf der Einsteckkarte für das Mobilfunkgerät gespeicherte Nummer zur Freischaltung des entsprechenden Mobilfunknetzes aufgebaut werden. In diesem Fall kann es vorgesehen sein, daß auf der Einsteckkarte für das Mobilfunkgerät wenigstens zwei Kennummern gespeichert sind. Während die erste Kennummer der Verbindung zur der erfindungsgemäßen Zusatzvorrichtung dient, dient die zweite Kennummer der direkten Verbindung in das Mobilfunknetz. Da die Einsteckkarten für die Mobilfunkgeräte im Stand der Technik bereits mit zwei unterschiedlichen Kennummern versehen werden, wobei die zweite Nummer als Totnummer im allgemeinen keine Funktionen hat, könnte etwa diese Totnummer die Verbindung zu der erfindungsgemäßen Zusatzvorrichtung bewerkstelligen, während die erste Nummer für eine direkte Verbindung in das hierdurch freigeschaltete Mobilfunknetz sorgt.

Ein weiteres charakteristisches Merkmal der Erfindung ist ein Verfahren zum Herstellen einer Verbindung zwischen einem oder mehreren Mobilfunkgeräten und einem oder mehreren unterschiedlichen Telekommunikationsnetzen unter Verwendung der erfindungsgemäßen Zusatzvorrichtung, wobei das Verfahren die folgenden Schritte umfaßt:
- Eingabe einer Rufnummer in das Mobilfunkgerät,
- Erstellen einer Verbindung zwischen dem Mobilfunkgerät und der Zusatzvorrichtung, vorzugsweise unter Verwendung eines internen Kommunikationscodes, mittels der Sende-/Empfangseinheit(en) für die interne Kommunikation,
- gegebenenfalls Mikroprozessor-gesteuerte Auswahl eines kostenoptimierten Verbindungsweges,
- Erstellen einer Verbindung zwischen der Zusatzvorrichtung und einem Telekommunikationsnetz, unter Verwendung eines externen Kommunikationscodes, mittels der Sende-/Empfangseinheit(en) für die externe Kommunikation, wobei die Zusatzvorrichtung eine direkte drahtlose, nicht über ein Festnetz geführte Verbindung zu dem jeweils ausgewählten Mobilfunknetz oder eine direkte Verbindung in ein Festnetz herstellt.

Weiterhin ist es ein charakteristisches Merkmel der vorliegenden Erfindung, daß ein Verfahren zum Erstellen einer Verbindung zwischen mehreren Mobilfunkgeräten, die einer erfindungsgemäßen Zusatzvorrichtung zugeordnet sind, wobei die Verbindung zwischen den Mobilfunkgeräten - bei Ausschluß eines Telekommunikationsnetzes - unter Verwendung des internen Kommunikationscodes durch die erfindungsgemäße Zusatzvorrichtung vermittelt wird ("interne Konferenzschaltung"), gezeigt wird. Dieses Verfahren umfaßt die folgenden Schritte:
- Eingabe einer Ruf- und/oder Kennummer in das Mobilfunkgerät,
- Erstellen einer Verbindung zwischen dem Mobilfunkgerät und der Zusatzvorrichtung unter Verwendung eines internen Kommunikationscodes, mittels der Sende-/Empfangseinheit(en) für die interne Kommunikation,
- Erstellen einer Verbindung zwischen der Zusatzvorrichtung und einem oder mehreren, insbesondere durch die Kennummer spezifizierten, Mobilfunkgeräten unter Verwendung des internen Kommunikationscodes, mittels der Sende-/Empfangseinheit(en) für die interne Kommunikation.

Ebenso ist ein Verfahren zum Erstellen einer Verbindung zwischen mehreren erfindungsgemäßen Zusatzvorrichtungen; wobei die Verbindung zwischen den Zusatzvorrichtungen - bei Ausschluß eines Telekommunikationnetzes - unter Verwendung eines internen Kommunikationscodes der Zusatzvorrichtungen vermittelt wird, ein Merkmal der vorliegenden Erfindung. Dieses Verfahren umfaßt die folgenden Schritte:
- Eingabe einer Ruf- und/oder Kennummer in die Zusatzvorrichtung,
- Erstellen einer Verbindung zwischen den Zusatzvorrichtungen unter Verwendung eines internen Kommunikationscodes.

Erfindungsgemäß ist die Verwendung der Zusatzvorrichtung in einem Fortbewegungsmittel, insbesondere Kraftwagen, Flugzeug, Schiff, Eisenbahn und/oder dergleichen vorgesehen.

Weiterhin ist erfindungsgemäß die Verwendung mehrerer Zusatzvorrichtungen zum Aufbau eines lokalen Netzes - bei Ausschluß eines Telekommunikationsfunknetzes - zwischen diesen Zusatzvorrichtungen vorgesehen, wobei bei einer weiteren Ausführungsform die gleichzeitige Verbindung in ein Telekommunikationsnetz möglich ist.

Weitere Vorteile und Merkmale der vorliegenden Erfindung werden nunmehr anhand der Beschreibung eines erfindungsgemäßen Ausführungsbeispiels dargestellt. Dieses Ausführungsbeispiel wird nur zum Zwecke der Veranschaulichung der Erfindung angegeben, wobei es nicht die Absicht der Anmelder ist, die Erfindung hierauf zu beschränken.

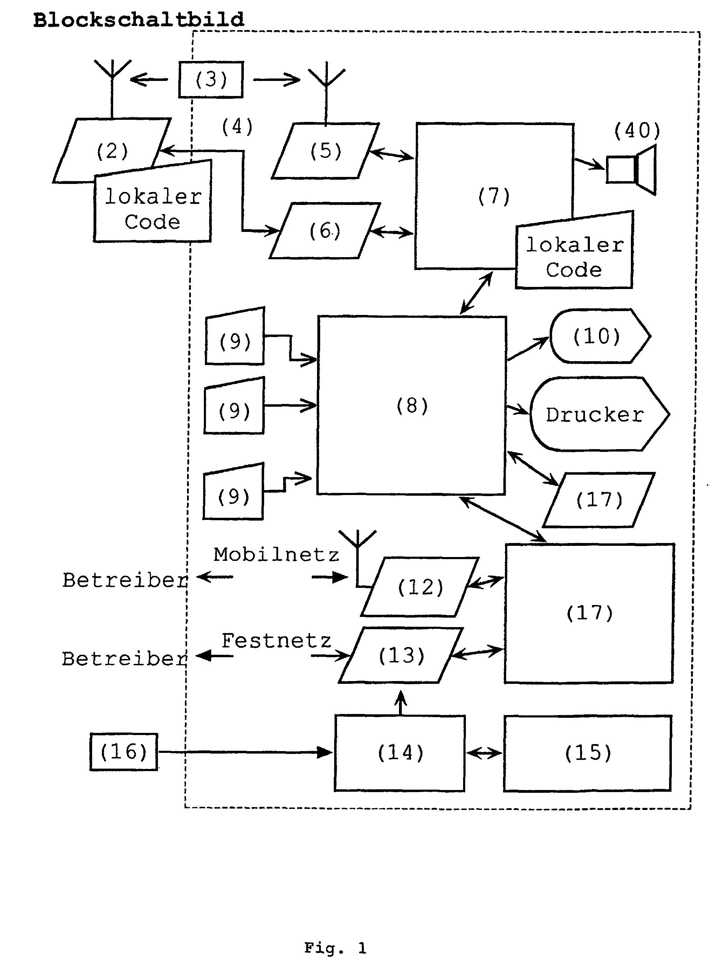

In der beiliegenden Figur 1 ist das Blockschaltbild einer erfindungsgemäßen Ausführungsform der Zusatzvorrichtung mit dem dieser Zusatzvorrichtung zugeordneten Mobilfunkgerät ("Handy") dargestellt.

Wie aus der Figur 1 ersichtlich ist, besteht zwischen der Zusatzvorrichtung (1) und dem zugeordneten Mobilfunkgerät ("Handy") (2) eine Verbindung über ein Hochfrequenzfunksignal (3) oder ein Kabel (4). Ist eine Hochfrequenzverbindung zwischen der Zusatzvorrichtung und dem Handy vorgesehen, so ist die Zusatzvorrichtung hierfür mit einem Sende-/Empfänger (5) zum Empfang für die von dem Handy ausgesandten Funksignale ausgestattet. Im Falle einer Kabelverbindung zwischen der Zusatzvorrichtung und dem Handy weist die Zusatzvorrichtung hierfür einen Kabeltreiber (6) auf. Um die eindeutige Zuordnung zwischen der Zusatzvorrichtung und dem Handy zu gewährleisten, wird die Verbindung über einen lokalen Code abgewickelt. Der lokale Code wird im Handy durch das Einstecken einer hierfür geeigneten SIM-Karte eingestellt. Dieser lokale Code muß hierzu vorher auf der SIM-Karte gespeichert werden. In der Zusatzvorrichtung wird der lokale Code durch die Geräteeinheit "lokale Kommunikation" (7) gesteuert. Hierzu ist der lokale Code in integrierten Programm- bzw. Datenspeichern abgelegt. Der lokale Code sorgt dafür, daß das Handy von der direkten Verbindung in ein Mobilfunknetz abgekoppelt wird. Außerdem sorgt der lokale Code für eine eindeutige Zuordnung zwischen der Zusatzvorrichtung und den damit zugeordneten Mobilfunkgeräten. Alternativ hierzu wäre es gleichermaßen möglich, daß der lokale Code bei dem Handy über eine Veränderung der integrierten Hardware, bzw. bei der Zusatzvorrichtung über das Einstecken einer speziellen SIM-Karte eingestellt wird. Der lokale Code bestimmt die Regeln für die Kommunikation zwischen der Zusatzvorrichtung und dem Handy. Hierdurch erfolgt insbesondere eine Einstellung des Übertragungsprotokolls, Frequenzband sowie weiteren für die Übertragung notwendigen Normierungen. Gleichermaßen wird über den lokalen Code vereinbart, wie viele und welche Handys über die Zusatzvorrichtung kommunizieren dürfen. Der Zugriff auf interne Informationen aus der Zusatzvorrichtung (Adressen, Rufnummern, anwenderspezifische Daten usw.) wird ebenfalls über den lokalen Code geregelt. Hierbei laufen rein systeminterne Funktionen ab, die mit der Verbindung in öffentliche Mobilfunknetze nichts zu tun haben.

Die Geräteeinheit "lokale Kommunikation" (7) ist zudem mit einer Freisprecheinrichtung (40) verbunden.

Zentrales Element der Zusatzvorrichtung (1) ist eine leistungsstarke Prozessoreinheit (beispielsweise TMS 320 Digital Signal Processor von Texas Instruments), die sich innerhalb der Geräteeinheit "Netzverwaltung" (8) befindet. Dieser Mikroprozessor sorgt dafür, daß die gerade gewünschte Funktion mit der benötigten Eigenschaft ausgeführt wird. Die Netzverwaltung (8) ist mit einem Steckblatt zum Einstecken wenigstens einer SIM-Karte (9) zur Freischaltung eines öffentlichen Mobilfunknetzes ausgestattet. Die Netzverwaltung (8) sorgt hierbei dafür, daß eine funktionsgerechte Verbindung in das entsprechende Telekommunikationsnetz hergestellt wird. Weiterhin ist die Netzverwaltung (8) mit einem Ausgabeport zur Verbindung mit einer Anzeigevorrichtung bzw. Drucker (10) versehen. Zur Erstellung einer Verbindung in ein externes Mobilfunknetz ist die Netzverwaltung mit der Geräteeinheit "externe Kommunikation" (11) verbunden. Diese Geräteeinheit sorgt über ihre Verschaltung mit dem Sender/Empfänger (12) für das öffentliche Mobilfunknetz für das Senden und Empfangen von Gesprächen. Gleichermaßen ist es möglich, daß die Geräteeinheit für die externe Kommunikation (11) mit einem Kabeltreiber (13) zum Senden und Empfangen von Gesprächen in das drahtgebundene Festnetz ausgestattet ist. Hierbei kann es sich um einen ISDN und/oder analog Kabeltreiber handeln. Die Zusatzvorrichtung wird über eine Geräteeinheit für die Stromversorgung (14) mit Energie versorgt. Dabei kann die elektrische Energie entweder von einem (gegegebenfalls wiederaufladbaren) Akku (15) stammen, oder von einer externen Stromversorgung (16). Die externe Stromversorgung (16) kann gleichermaßen zum Wiederaufladen des Akkus (15) verwendet werden. Die Netzverwaltung (8) ist zudem mit einem Kommunikationsport (17) ausgestattet, der für eine Verbindung mit einem Computer, oder einem Computernetz, insbesondere dem Internet geeignet ist.

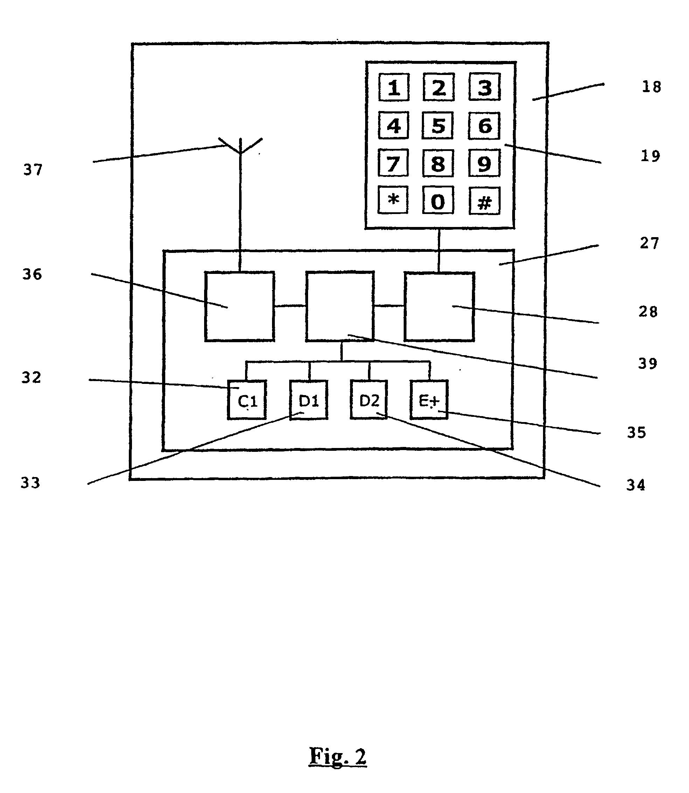

Die beigefügte Figur 2 zeigt in schematischer Ansicht ein weiteres Ausführungsbeispiel der erfindungsgemäßen Zusatzvorrichtung.

Die in Figur 2 gezeigte Zusatzvorrichtung (18) enthält, wie das herkömmliche Gerät dieser Art, eine Nummerngeber 19, z.B. eine Tastatur, zum Eingeben einer dem anzurufenden Kommunikationsgerät (20, 21) (Figur 3) zugeordneten Rufnummer sowie einer dem zugehörigen drahtgebundenen Netz (22) oder Mobilfunknetz (23, 24, 25, 26) zugeordnete Netzkennzahl.

Die Figur 3 zeigt vier Mobilfunknetze und ein drahtgebundenes Netz mit einem mobilen und einem drahtgebunden Kommunikationsgerät in einer schematischen Darstellung.

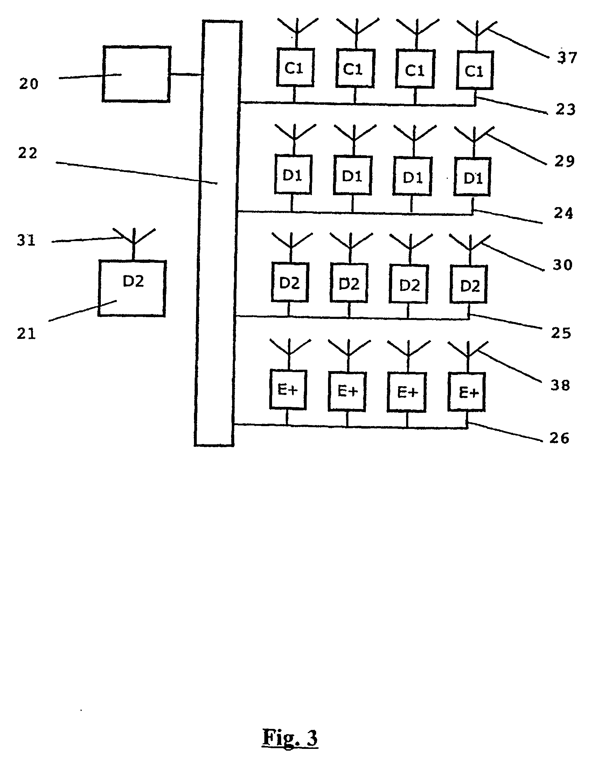

Die Zusatzvorrichtung (18) enthält eine elektronische Auswahleinrichtung (27), die aufgrund der Netzkennzahl sowie der in einem Speicher (28) abgelegten Leistungs- und Kostenmerkmale aller verfügbaren Mobilfunknetze (23, 24, 25, 26) (Figur 3) die Verbindung mit dem gewünschten mobilen Kommunikationsgerät (21) automatisch über das wirtschaftlich günstigte Netz herstellt, in diesem Fall über das Mobilfunknetz (25) (das D2-Netz), zu dem das mobile Kommunikationsgerät (21) (ein D2-Gerät) gehört. Selbstverständlich wird zumeist der direkte, netzinterne Weg gewählt, weil dieser wohl immer der günstigste Weg ist - es sei denn, es liegen netzinterne Tarifschwankungen vor.

Zum besseren Verständnis der Arbeitsweise der Erfindung sei zunächst nochmals der Verbindungsweg bei einem herkömmlichen Mobilfunkgerät beschrieben, das z.B. zu dem D1-Netz gehört. Bei diesem Mobilfunkgerät ist eine direkte Verbindung nur zu dem D1-Netz möglich, da die Funksende- und Empfangseinrichtung eine Frequenz ausstrahlt bzw. empfängt, die nur von den Antennen der Sender des D1-Netzes empfangen bzw. ausgestrahlt werden.

Um mit dem zu dem D2-Mobilfunknetz gehörenden mobilen Kommunikationsgerät (21) zu kommunizieren, muß die Verbindung über drei Netze laufen, nämlich von dem D1-Mobilfunkgerät über dessen Antenne zu einer der Antennen (29) des D1-Netzes (24), von dort über ein drahtgebundenes Netz (22), das z.B. das Netz der Telekom sein kann, zu dem D2-Netz (25), das über eine seiner Antennen (30) die Verbindung mit dem mobilen Kommunikationsgerät (21) über dessen Antenne (31) herstellt.

Diese "Drei-Netze-Verbindung" ist nicht nur teuerer, da für jedes Netz Gebühren bezahlt werden müssen, sondern auch von erheblich schlechterer Qualität, denn es kann die dreifache Zahl von Störungen im Vergleich zu einer Verbindung über ein Netz auftreten. Außerdem verdreifacht sich auch dementsprechend die Zahl der möglichen "besetzt"-Fälle.

Die erfindungsgemäße Zusatzvorrichtung (18) ermöglicht es, eine Verbindung zu einem anderen mobilen Kommunikationsgerät, das zu jedem beliebigen Mobilfunknetz gehören kann, jeweils über nur ein Mobilfunknetz herzustellen. Zu diesem Zweck befindet sich in der Auswahleinrichtung (27) eine Reihe von wenigstens vier Halterungen (32, 33, 34, 35) zum Aufnehmen der für die Zugangsberechtigung zu allen verfügbaren Mobilfunknetzen (23, 24, 25, 26) (C1, D1, D2, E+) erforderlichen Chipkarten sowie eine Funksende- und Empfangseinrichtung (36) mit einer Antenne (37) für die drahtlose Verbindung zu den Empfangs- bzw. Sendeantennen (37, 29, 30, 38) dieser Mobilfunknetze (23, 24, 25, 26).

Aufgrund der mit dem Nummerngeber (19) eingegebenen Netzkennzahl 0172 des D2-Mobilfunknetzes (25), zu dem das beispielsweise angewählte mobile Kommunikationsgerät (21) gehört und aufgrund der vorhandenen Chipkarten erkennt ein in der Auswahleinrichtung (27) vorgesehener Mikroprozessor (39), zu welchem Mobilfunknetz (23, 24, 25, 26) (nämlich 25) die eingegebene Netzkennzahl gehört und welche Sende- und Empfangsfrequenz in der Funksende- und Empfangseinrichtung (36) eingestellt und von der Antenne (37) ausgestrahlt bzw. empfangen werden muß, um die Verbindung zu den Antennen (30) des zu dem mobilen Kommunikationsgerät (21) gehörenden D2-Mobilfunknetzes (25) herzustellen.

Die Verbindung von der Zusatzvorrichtung (18) zu dem mobilen Kommunikationsgerät (21) läuft also aufgrund des geschilderten Auswahlvorganges automatisch direkt zu einer der Antennen (30) des zugehörigen D2-Mobilfunknetzes (25) und von dort über die selbe oder - je nach Standort - über eine andere der Antennen (30) zu der Antenne (31) des mobilen Kommunikationsgerätes (21).

Für eine Verbindung von der Zusatzvorrichtung (18) zu einem drahtgebundenen Kommunikationsgerät (20), das beispielsweise an ein drahtgebundenes Netz (22) angeschlossen ist, kann eines der verfügbaren Mobilfunknetze (23, 24, 25, 26) ausgewählt werden, über das die Verbindung laufen soll. Dabei wählt die Auswahleinrichtung (27) automatisch dasjenige Netz aus, das sich aufgrund der in dem Speicher (28) abgelegten Leistungs- und Kostenmerkmale als das günstigste Netz herausstellt.

Die erfindungsgemäße Zusatzvorrichtung (18) kann von anderen Kommunikationsgeräten aus zur Zeit mit vier verschiedenen Netzkennzahlen und Rufnummern erreicht werden, da für jedes der verfügbaren Mobilfunknetze (23, 24, 25, 26) eine andere Nummer zugeteilt wird. Es besteht jedoch die Möglichkeit, nur eine der vier Nummern öffentlich anzugeben, wobei zweckmäßig das qualitativ beste oder aber das wirtschaftlich günstigste Netz dafür ausgewählt werden kann.

## Patentansprüche

1. Zusatzvorrichtung (1) für ein oder mehrere Mobilfunkgeräte (2), wie Handys, wobei die Vorrichtung eine direkte, drahtlose, nicht über ein Festnetz geführte Verbindung zu einem oder mehreren Mobilfunknetzen oder eine Verbindung in und/oder über ein Festnetz erlaubt, deren Auswahl über die Zusatzvorrichtung (1) frei bestimmbar ist, wobei die Zusatzeinrichtung umfaßt:
- eine oder mehrere Sende-/Empfangseinheiten (5, 12), geeignet zur Kommunikation mit einem oder mehreren Mobilfunkgeräten (2),
- ein oder mehrere ISDN/analog Kabeltreiber (6, 13), geeignet zur Kommunikation mit einem oder mehreren Festnetzen;
- wenigstens ein Mikroprozessor, geeignet zur Steuerung und Kontrolle der Kommunikation der Zusatzvorrichtung (1) mit den Mobilfunkgeräten (2),
- Einrichtungen zur Programm- und Datenspeicherung;
- wenigstens einen Energiespeicher,
- die interne Kommunikation zwischen der Zusatzvorrichtung (1) und dem/den zugeordneten Mobilfunkgerät/en (2) über eine Funkverbindung (3) und/oder Kabelverbindung (4) erfolgt, wobei
- die Zuordnung zwischen der Zusatzvorrichtung (1) und dem/den Mobilfunkgerät/en (2) mittels festlegbaren Kommunikationscodes und/oder Funkfrequenzen erfolgt,
**dadurch gekennzeichnet, daß**
- die eine oder mehreren Sende-/Empfangseinheiten (5, 12) auch zur Kommunikation mit einem oder mehreren unterschiedlichen Mobilfunknetzen geeignet ist/sind;
- der eine oder die mehreren ISDN/analog Kabeltreiber (6, 13) auch zur Kommunikation mit einem oder mehreren Mobilfunkgeräten geeignet ist/sind;
- der Mikroprozessor auch zur Steuerung und Kontrolle der Kommunikation der Zusatzvorrichtung (1) mit einem oder mehreren unterschiedlichen Mobilfunknetzen bzw. Festnetzen geeignet ist/sind,
- der Energiespeicher vorzugsweise ein Akku (15) und/oder eine Brennstoffzelle ist;
- eine Aufnahmevorrichtung für die Aufnahme einer oder mehrerer SIM-Karten (9) zur Freischaltung von ein oder mehreren Mobilfunknetzen vorgesehen ist;
- die Zuordnung zwischen der Zusatzvorrichtung (1) und dem/den Mobilfunkgerät/en (2) eine direkte Verbindung zwischen dem/den Mobilfunkgerät/en (2) und dem jeweiligen Mobilfunknetz verhindert;
- die externe Kommunikation zwischen der Zusatzvorrichtung (1) und dem/den Mobilfunknetz/en über Funkverbindungen in das Mobilfunknetz und/oder Kabelverbindungen in das Festnetz erfolgt.

2. Zusatzvorrichtung (1) nach Anspruch 1,
**dadurch gekennzeichnet, daß**
die Funkverbindung (3) zur internen Kommunikation zwischen der Zusatzvorrichtung (1) und dem/den Mobilfünkgerät/en (2) über eine Hochfrequenz- oder Infrarotschnittstelle erfolgt

3. Zusatzvorrichtung (1) nach einem der vorhergehenden Ansprüche,
**dadurch gekennzeichnet, daß**
der interne Kommunikationscode durch in diese und/oder in die Mobilfünkgerät/e (2) einsteckbare SIM-Karten (9), auf welche/n der interne Kommunikationscode gespeichert ist, und/oder über eine entsprechende Einstellung bzw. Veränderung der in die Zusatzvorrichtung (1) bzw. Mobilfunkgerät/e (2) integrierten Programm- und Datenspeicher festgelegt wird, wobei zudem die Verbindung in das Mobilfunknetz gesperrt ist.

4. Zusatzvorrichtung (1) nach einem der vorhergehenden Ansprüche,
**dadurch gekennzeichnet, daß**
der Mikroprozessor denjenigen Kommunikationspfad ermittelt, der hinsichtlich der Kommunikationskosten optimiert ist, wobei die Ermittlung in Abhängigkeit Netz-spezifischer Kostenparameter erfolgt.

5. Zusatzvorrichtung (1) nach einem der vorhergehenden Ansprüche,
**dadurch gekennzeichnet, daß**
diese eine oder mehrere Anschluß-/Schnittstellen zur Verbindung mit weiteren Geräten oder Geräteeinheiten, insbesondere eine Anzeigevorrichtung (10), Druckvon-ichtung, Computer und/oder dergleichen aufweist.

6. Zusatzvorrichtung (1) nach einem der vorhergehenden Ansprüche,
**dadurch gekennzeichnet, daß**
diese eine oder mehrere Anschluß-/Schnittstellen (17) zur Verbindung mit lokalen bzw. nicht-lokalen Computernetzwerken, insbesondere Internet, aufweist.

7. Zusatzvorrichtung (1) nach einem der vorhergehenden Ansprüche,
**dadurch gekennzeichnet, daß**
diese eine interne und/oder externe, ggf. wiederaufladbare Stromversorgung (14) aufweist und/oder über die Mobilfünkgerät/e (2) mit Strom versorgt wird.

8. Zusatzvorrichtung (1) nach einem der vorhergehenden Ansprüche,
**dadurch gekennzeichnet, daß**
diese in eine der ihr zugeordneten Mobilfünkgeräte (2) und/oder Telefonanlagen integriert ist.

9. Zusatzvorrichtung (1) nach einem der vorhergehenden Ansprüche,
**dadurch gekennzeichnet, daß**
der Mikroprozessor unter Ausschluß von externen Mobilfunknetzen oder Festnetzen und ggf. unter Ausschluß der Verwendung des internen Kommunikationscodes, eine ausschließlich interne Kommunikation zwischen den der Zusatzvorrichtung (1) zugeordneten Mobilfunkgeräten (2) ermöglicht.

10. Zusatzvorrichtung (1) nach einem der vorhergehenden Ansprüche,
**dadurch gekennzeichnet, daß**
der Mikroprozessor unter Verwendung des internen und externen Kommunikationscodes, eine Kommunikation zwischen den der Zusatzvorrichtung (1) zugeordneten Mobilfunkgeräten (2), sowie auch nicht-zugeordneten Mobilfunkgeräten und weiteren Zusatzvorrichtungen ermöglicht.

11. Zusatzvorrichtung (1) nach einem der vorhergehenden Ansprüche,
**dadurch gekennzeichnet, daß**
der Mikroprozessor eine Regelung der zugeordneten Mobilfunkgeräte (2), insbesondere Auswahl der zugeordneten Mobilfunkgeräte (2) über einstellbare Prioritätsvorgaben, ermöglicht.

12. Zusatzvorrichtung (1) nach einem der vorhergehenden Ansprüche,
**dadurch gekennzeichnet, daß**
der Mikroprozessor die Funktionen anklopfen, Rufum- bzw. Rufweiterleitung, Anrufbeantwortung ermöglicht.

13. Zusatzvorrichtung (1) nach einem der vorhergehenden Ansprüche,
**dadurch gekennzeichnet, daß**
der Mikroprozessor den Zugriff auf die in der Zusatzvorrichtung (1) gespeicherten Daten und Programme unter einstellbaren Zugriffsbeschränkungen ermöglicht.

14. Zusatzvorrichtung (1) nach einem der vorhergehenden Ansprüche,
**dadurch gekennzeichnet, daß**
der Mikroprozessor, insbesondere zur Übertragung und Speicherung von Daten, eigenständig eine Verbindung zu dem/den Mobilfunkgerät/en (2), Mobilfunknetzen und/oder lokalen bzw. nicht-lokalen Computernetzen, insbesondere Internet herstellt

15. Zusatzvorrichtung (1) nach einem der vorhergehenden Ansprüche,
**dadurch gekennzeichnet, daß**
diese eine Freisprecheinrichtung (40) aufweist.

16. Zusatzvorrichtung (1) nach einem der vorhergehenden Ansprüche,
**dadurch gekennzeichnet, daß**
der Mikroprozessor bei Unterbrechung der Verbindung zwischen dem Mobilfunkgerät (2) und der Zusatzvorrichtung (1) eine automatische Abkoppelung des Mobilfunkgerätes (2) von der Zusatzvorrichtung (1) bewirkt, wobei eine direkte Verbindung des abgekoppelten Mobilfunkgerätes (2) in ein Mobilfunknetz ermöglicht wird.

17. Verfahren zum Erstellen einer Verbindung eines oder mehrerer Mobilfunkgeräte (2) in ein oder mehrere unterschiedliche Mobilfunknetze oder Festnetze unter Verwendung der Zusatzvorrichtung (1) nach einem der Ansprüche 1 - 16, umfassend die Schritte:
- Eingabe einer Rufnummer in das Mobilfunkgerät (2),
- Erstellen einer Verbindung zwischen dem Mobilfunkgerät (2) und der Zusatzvorrichtung (1), vorzugsweise unter Verwendung eines internen Kommunikationscodes, mittels der Sende-/Empfangseinheitlen (5) für die interne Kommunikation,
- Gegebenenfalls Mikroprozessor-gesteuerte Auswahl eines kostenoptimierten Verbindungsweges,
- Erstellen einer Verbindung zwischen der Zusatzvorrichtung (1) und einem Mobilfunknetz oder Festnetz, unter Verwendung eines externen Kommunikationscodes, mittels der Sende-/Empfanseinheit/en (12) für die externe Kommunikation, wobei die Zusatzvorrichtung (1) eine direkte, drahtlose, nicht über ein Festnetz geführte Verbindung zu dem jeweils ausgewählten Mobilfunknetz oder eine direkte Verbindung in ein Festnetz herstellt.

18. Verfahren zum Erstellen einer Verbindung zwischen mehreren, einer Zusatzvorrichtung (1) nach einem der Ansprüche 1 - 16 zugeordneten, Mobilfunkgeräten (2), wobei die Verbindung zwischen den Mobilfunkgeräten (2) - bei Ausschluß eines Mobilfunknetzes und/oder Festnetzes - unter Verwendung des internen Kommunikationscodes durch die Zusatzvorrichtung (1) nach einem der Ansprüche 1-16 vermittelt wird, umfassend die Schritte:
- Eingabe einer Ruf- und/oder Kennummer in das Mobilfunkgerät (2),
- Erstellen einer Verbindung zwischen dem Mobilfunkgerät (2) und der Zusatzvorrichtung (1) unter Verwendung eines internen Kommunikationscodes, mittels der Sende-/Empfanseinheit/en (5) für die interne Kommunikation,
- Erstellen einer Verbindung zwischen der Zusatzvorrichtung (1) und einem oder mehreren, insbesondere durch die Kennummer spezifizierten, Mobilfunkgeräten (2) unter Verwendung des internen Kommunikationscodes, mittels der Sende-/Empfangseinheit/en (5) für die interne Kommunikation.

19. Verfahren zum Erstellen einer Verbindung zwischen mehreren Zusatzvorrichtungen (1) nach einem der Ansprüche 1 - 16, wobei die Verbindung zwischen den Zusatzvorrichtungen (1) - bei Ausschluß eines Mobilfünknetzes und/oder Festnetzes - unter Verwendung eines internen Kommunikationscodes der Zusatzvorrichtungen (1) nach einem der Ansprüche 1-16 vermittelt wird, umfassend die Schritte:
- Eingabe einer Ruf- und/oder Kennummer in die Zusatzvorrichtung (1),
- Erstellen einer Verbindung zwischen den Zusatzvorrichtungen (1) unter Verwendung eines internen Kommunikationscodes.

20. Verwendung der Zusatzvorrichtung (1) nach einem der Ansprüche 1 - 16, in einem Fortbewegungsmittel, insbesondere Kraftwagen, Flugzeug, Schiff, Eisenbahn oder dergleichen.

21. Verwendung mehrerer Zusatzvorrichtungen (1) nach einem der Ansprüche 1 - 16 zum Aufbau eines lokalen Netzes - bei Ausschluß eines Mobilfunknetzes und/oder Festnetzes - zwischen diesen Zusatzvorrichtungen (1), wobei vorzugsweise eine Verbindung zwischen diesen Zusatzvorrichtungen (1) und Mobilfunknetzen und/oder Festnetzen möglich ist.

## Claims

1. Supplementary apparatus (1) for one or more mobile radios (2), such as mobile phones, where the apparatus permits a direct, wireless connection, not routed via a landline network, to one or more mobile radio networks or a connection to and/or via a landline network, selection of which connection can be determined as desired using the supplementary apparatus (1), the supplementary device comprising:
- one or more transmission/reception units (5, 12), suitable for communication with one or more mobile radios (2),
- one or more ISDN/analogue cable drivers (6, 13), suitable for communication with one or more landline networks;
- at least one microprocessor, suitable for controlling and monitoring the communication by the supplementary apparatus (1) with the mobile radios (2),
- devices for program and data storage;
- at least one energy store,
- the internal communication between the supplementary apparatus (1) and the associated mobile radio(s) (2) taking place via a radio link (3) and/or a cable connection (4), with
- the association between the supplementary apparatus (1) and the mobile radio(s) (2) being made using definable communication codes and/or radio frequencies,
**characterized in that**
- the one or more transmission/reception units (5, 12) is/are also suitable for communication with one or more different mobile radio networks;
- the one or more ISDN/analogue cable drivers (6, 13) is/are also suitable for communication with one or more mobile radios;
- the microprocessor is also suitable for controlling and monitoring the communication by the supplementary apparatus (1) with one or more different mobile radio networks or landline networks;
- the energy store is preferably a storage battery (15) and/or a fuel cell;
- a holding apparatus for holding one or more SIM cards (9) is provided for enabling one or more mobile radio networks;
- the association between the supplementary apparatus (1) and the mobile radio(s) (2) prevents a direct connection between the mobile radio(s) (2) and the respective mobile radio network;
- the external communication between the supplementary apparatus (1) and the mobile radio network(s) takes place via radio links to the mobile radio network and/or cable connections to the landline network.

2. Supplementary apparatus (1) according to Claim 1,
**characterized in that**
the radio link (3) for internal communication between the supplementary apparatus (1) and the mobile radio(s) (2) is made via a radio-frequency or infrared interface.

3. Supplementary apparatus (1) according to one of the preceding claims,
**characterized in that**
the internal communication code is defined by SIM cards (9) which can be plugged into said supplementary apparatus and/or into the mobile radio(s) (2) and store the internal communication code, and/or by means of appropriate setting or alteration of the program and data stores integrated in the supplementary apparatus (1) or mobile radio(s) (2), with the connection to the mobile radio network also being disabled.

4. Supplementary apparatus (1) according to one of the preceding claims,
**characterized in that**
the microprocessor ascertains that communication path which is optimized in terms of communication costs, with network-specific cost parameters being taken as a basis for the ascertainment.

5. Supplementary apparatus (1) according to one of the preceding claims,
**characterized in that**
it has one or more connection interfaces for connection to other appliances or appliance units, particularly a display apparatus (10), a printing apparatus, a computer and/or the like.

6. Supplementary apparatus (1) according to one of the preceding claims,
**characterized in that**
it has one or more connection interfaces (17) for connection to local or non-local computer networks, particularly the Internet.

7. Supplementary apparatus (1) according to one of the preceding claims,
**characterized in that**
it has an internal and/or external, possibly rechargeable power supply (14) and/or is supplied with power via the mobile radio(s) (2).

8. Supplementary apparatus (1) according to one of the preceding claims,
**characterized in that**
it is integrated in one of its associated mobile radios (2) and/or telephone installations.

9. Supplementary apparatus (1) according to one of the preceding claims,
**characterized in that**
the microprocessor excludes external mobile radio networks or landline networks and possibly excludes the use of the internal communication code to permit exclusively internal communication between the mobile radios (2) associated with the supplementary apparatus (1).

10. Supplementary apparatus (1) according to one of the preceding claims,
**characterized in that**
the microprocessor uses the internal and external communication codes to permit communication between the mobile radios (2) associated with the supplementary apparatus (1) and also between non-associated mobile radios and other supplementary apparatuses.

11. Supplementary apparatus (1) according to one of the preceding claims,
**characterized in that**
the microprocessor permits regulation of the associated mobile radios (2), particularly selection of the associated mobile radios (2) using settable priority presets.

12. Supplementary apparatus (1) according to one of the preceding claims,
**characterized in that**
the microprocessor permits the functions of call waiting, call diversion or call forwarding and call answering.

13. Supplementary apparatus (1) according to one of the preceding claims,
**characterized in that**
the microprocessor permits access to the data and programs stored in the supplementary apparatus (1) under settable access restrictions.

14. Supplementary apparatus (1) according to one of the preceding claims,
**characterized in that**,
particularly for transmitting and storing data, the microprocessor autonomously sets up a connection to the mobile radio(s) (2), mobile radio networks and/or local and non-local computer networks, particularly the Internet.

15. Supplementary apparatus (1) according to one of the preceding claims,
**characterized in that**
it has a hands-free device (40).

16. Supplementary apparatus (1) according to one of the preceding claims,
**characterized in that**,
if the connection between the mobile radio (2) and the supplementary apparatus (1) is interrupted, the microprocessor automatically decouples the mobile radio (2) from the supplementary apparatus (1), with direct connection of the decoupled mobile radio (2) to a mobile radio network being permitted.

17. Method for setting up a connection from one or more mobile radios (2) to one or more different mobile radio networks or landline networks using the supplementary apparatus (1) according to one of Claims 1-16, comprising the following steps:
- a call number is entered into the mobile radio (2),
- a connection is set up between the mobile radio (2) and the supplementary apparatus (1), preferably using an internal communication code, by means of the transmission/reception unit(s) (5) for the internal communication,
- a connection path optimized in terms of cost is selected under microprocessor control if appropriate,
- a connection is set up between the supplementary apparatus (1) and a mobile radio network or landline network, using an external communication code, by means of the transmission/reception unit(s) (12) for the external communication, with the supplementary apparatus (1) setting up a direct, wireless connection, not routed via a landline network, to the respectively selected mobile radio network or a direct connection to a landline network.

18. Method for setting up a connection between a plurality of mobile radios (2) associated with a supplementary apparatus (1) according to one of Claims 1-16, where the connection is switched between the mobile radios (2) - with the exclusion of a mobile radio network and/or landline network - by the supplementary apparatus (1) according to one of Claims 1-16 using the internal communication code, comprising the following steps:
- a call number and/or identification number is entered into the mobile radio (2),
- a connection is set up between the mobile radio (2) and the supplementary apparatus (1), using an internal communication code, by means of the transmission/reception unit(s) (5) for the internal communication,
- a connection is set up between the supplementary apparatus (1) and one or more mobile radios (2), particularly specified by the identification number, using the internal communication code, by means of the transmission/reception unit(s) (5) for the internal communication.

19. Method for setting up a connection between a plurality of supplementary apparatuses (1) according to one of Claims 1-16, where the connection is switched between the supplementary apparatuses (1) - with the exclusion of a mobile radio network and/or landline network - using an internal communication code in the supplementary apparatuses (1) according to one of Claims 1-16, comprising the following steps:
- a call number and/or identification number is entered into the supplementary apparatus (1),
- a connection is set up between the supplementary apparatuses (1) using an internal communication code.

20. Use of the supplementary apparatus (1) according to one of Claims 1-16 in a means of transport, particularly a car, an aircraft, a ship, a railway or the like.

21. Use of a plurality of supplementary apparatuses (1) according to one of Claims 1-16 for setting up a local area network - with the exclusion of a mobile radio network and/or landline network - between these supplementary apparatuses (1), a connection preferably being possible between these supplementary apparatuses (1) and mobile radio networks and/or landline networks.

## Revendications

1. Dispositif complémentaire (1) pour un ou plusieurs appareils radiotéléphoniques mobiles (2), tels que téléphones mobiles, permettant une liaison directe, sans fil, ne passant pas par un réseau fixe, avec un ou plusieurs réseaux de radiotéléphonie mobile ou une liaison avec et/ou via un réseau fixe librement sélectionné par le dispositif complémentaire (1), ledit dispositif complémentaire comprenant :
- une ou plusieurs unités d'émission/réception (5, 12) aptes à communiquer avec un ou plusieurs appareils radiotéléphoniques mobiles (2) ;
- un ou plusieurs amplificateurs de ligne RNIS/analogique (6, 13) aptes à communiquer avec un ou plusieurs réseaux fixes ;
- au moins un microprocesseur apte à commander et contrôler la communication du dispositif complémentaire (1) avec les appareils radiotéléphoniques mobiles (2) ;
- des dispositifs de mémorisation de programmes et de données ;
- au moins un accumulateur d'énergie ;
- la communication interne entre le dispositif complémentaire (1) et le(s) appareil(s) radiotéléphonique(s) mobile(s) (2) est réalisée par une liaison radio (3) et/ou une liaison câblée (4),
- l'affectation entre le dispositif complémentaire (1) et le(s) appareil(s) radiotéléphonique(s) mobile(s) (2) étant réalisée au moyen de codes de communication définissables et/ou de fréquences radio,
**caractérisé par le fait que**
- la ou les unité(s) d'émission/réception (5, 12) est/sont également apte(s) à communiquer avec un ou plusieurs réseaux de radiotéléphonie mobile différents ;
- le ou les amplificateur(s) de ligne RNIS/analogique (6, 13) est/sont également apte(s) à communiquer avec un ou plusieurs appareil(s) radiotéléphonique(s) mobile(s) ;
- le microprocesseur est également apte à commander et contrôler la communication du dispositif complémentaire (1) avec un ou plusieurs réseaux de radiotéléphonie mobile ou réseaux fixes différents ;
- l'accumulateur d'énergie est de préférence une batterie (15) et/ou une pile à combustible ;
- il est prévu un dispositif d'accueil pour une ou plusieurs cartes SIM (9) pour l'accès à un ou plusieurs réseaux de radiotéléphonie mobile ;
- l'affectation entre le dispositif complémentaire (1) et le(s) appareil(s) radiotéléphonique(s) mobile(s) (2) empêche une liaison directe entre le(s) appareil(s) radiotéléphonique(s) mobile(s) (2) et le réseau de radiotéléphonie mobile considéré ;
- la communication externe entre le dispositif complémentaire (1) et le(s) réseau(x) de radiotéléphonie mobile est réalisée par liaisons radio sur le réseau de radiotéléphonie mobile et/ou par liaisons câblées sur le réseau fixe.

2. Dispositif complémentaire (1) selon la revendication 1,
**caractérisé par le fait que**
la liaison radio (3) pour la communication interne entre le dispositif complémentaire (1) et le(s) appareil(s) radiotéléphonique(s) mobile(s) (2) est réalisée via une interface à haute fréquence ou à infrarouge.

3. Dispositif complémentaire (1) selon l'une des revendications précédentes,
**caractérisé par le fait que**
le code de communication interne est défini par des cartes SIM (9) enfichables dans ce dispositif et/ou dans les appareils radiotéléphoniques mobiles (2), sur lesquelles le code de communication interne est enregistré, et/ou par un réglage ou une modification correspondant(e) des mémoires de programme et de données intégrées dans le dispositif complémentaire (1) ou dans le(s) appareil(s) radiotéléphonique(s) mobile(s) (2), la liaison avec le réseau de radiotéléphonie mobile étant de plus bloquée.

4. Dispositif complémentaire (1) selon l'une des revendications précédentes,
**caractérisé par le fait que**
le microprocesseur détermine la voie de communication optimisant les coûts de communication, cette détermination étant réalisée en fonction de paramètres de coût spécifiques aux réseaux.

5. Dispositif complémentaire (1) selon l'une des revendications précédentes,
**caractérisé par le fait que**
celui-ci présente un ou plusieurs points de raccordement/jonction pour la liaison avec d'autres appareils ou unités d'appareils, en particulier un dispositif d'affichage (10), un dispositif d'impression, un ordinateur et/ou analogue.

6. Dispositif complémentaire (1) selon l'une des revendications précédentes,
**caractérisé par le fait que**
celui-ci présente un ou plusieurs points de raccordement/jonction (17) pour la liaison avec des réseaux d'ordinateurs locaux ou non locaux, en particulier Internet.

7. Dispositif complémentaire (1) selon l'une des revendications précédentes,
**caractérisé par le fait que**
celui-ci présente une alimentation électrique interne et/ou externe (14) et/ou est alimenté en électricité via le(s) appareil(s) radiotéléphonique(s) mobile(s) (2).

8. Dispositif complémentaire (1) selon l'une des revendications précédentes,
**caractérisé par le fait que**
celui-ci est intégré dans un(e) des appareils radiotéléphoniques mobiles (2) et/ou installations téléphoniques qui lui sont affecté(e)s.

9. Dispositif complémentaire (1) selon l'une des revendications précédentes,
**caractérisé par le fait que**
le microprocesseur permet, à l'exclusion de réseaux externes de radiotéléphonie mobile ou de réseaux fixes et le cas échéant à l'exclusion de l'utilisation du code de communication interne, une communication exclusivement interne entre les appareils radiotéléphoniques mobiles (2) affectés au dispositif complémentaire (1).

10. Dispositif complémentaire (1) selon l'une des revendications précédentes,
**caractérisé par le fait que**
le microprocesseur permet, en faisant usage du code de communication interne et externe, une communication entre les appareils radiotéléphoniques mobiles (2) affectés au dispositif complémentaire (1) ainsi qu'entre des appareils radiotéléphoniques mobiles non affectés et d'autres dispositifs complémentaires.

11. Dispositif complémentaire (1) selon l'une des revendications précédentes,
**caractérisé par le fait que**
le microprocesseur permet une gestion des appareils radiotéléphoniques mobiles (2) affectés, en particulier la sélection des appareils radiotéléphoniques mobiles (2) affectés par définitions de priorité réglables.

12. Dispositif complémentaire (1) selon l'une des revendications précédentes,
**caractérisé par le fait que**
le microprocesseur permet les fonctions appel en instance, renvoi ou réacheminement d'appel, répondeur téléphonique.

13. Dispositif complémentaire (1) selon l'une des revendications précédentes,
**caractérisé par le fait que**
le microprocesseur permet d'accéder aux données et programmes enregistrés dans le dispositif complémentaire (I) moyennant des restrictions d'accès réglables.

14. Dispositif complémentaire (1) selon l'une des revendications précédentes,
**caractérisé par le fait que**
le microprocesseur établit de manière autonome, en particulier pour la transmission et la mémorisation de données, une liaison avec le(s) appareil(s) radiotéléphonique(s) mobile(s) (2), réseaux de radiotéléphonie mobile et/ou réseaux d'ordinateurs locaux ou non locaux, en particulier Internet.

15. Dispositif complémentaire (1) selon l'une des revendications précédentes,
**caractérisé par le fait que**
celui-ci présente un dispositif de conversation mains libres (40).

16. Dispositif complémentaire (1) selon l'une des revendications précédentes,
**caractérisé par le fait que**
le microprocesseur provoque, en cas de coupure de la liaison entre l'appareil radiotéléphonique mobile (2) et le dispositif complémentaire (1), un découplage automatique de l'appareil radiotéléphonique mobile (2) du dispositif complémentaire (1), ce qui permet une liaison directe de l'appareil téléphonique mobile (2) découplé avec un réseau de radiotéléphonie mobile.

17. Procédé pour l'établissement d'une liaison d'un ou plusieurs appareils radiotéléphoniques mobiles (2) avec un ou plusieurs réseaux de radiotéléphonie mobile ou réseaux fixes différents, faisant usage du dispositif complémentaire (1) selon l'une des revendications 1 à 16, comprenant les étapes suivantes :
- entrée d'un numéro d'appel dans l'appareil radiotéléphonique mobile (2),
- établissement d'une liaison entre l'appareil radiotéléphonique mobile (2) et le dispositif complémentaire (1), de préférence en faisant usage d'un code de communication interne, au moyen de la ou les unité(s) d'émission/réception (5) pour la communication interne,
- le cas échéant, sélection pilotée par microprocesseur d'une voie de communication optimisant les coûts,
- établissement d'une liaison entre le dispositif complémentaire (1) et un réseau de radiotéléphonie mobile ou un réseau fixe, en faisant usage d'un code de communication externe, au moyen de la ou les unité(s) d'émission/réception (12) pour la communication externe, le dispositif complémentaire (1) établissant une liaison directe, sans fil, ne passant pas par un réseau fixe avec le réseau de radiotéléphonie mobile sélectionné ou une liaison directe avec un réseau fixe.

18. Procédé pour l'établissement d'une liaison entre plusieurs appareils radiotéléphoniques mobiles (2) affectés à un dispositif complémentaire (1) selon l'une des revendications 1 à 16, la liaison entre les appareils radiotéléphoniques mobiles (2) étant établie - à l'exclusion d'un réseau de radiotéléphonie mobile et/ou d'un réseau fixe - par le dispositif complémentaire (1) selon l'une des revendications 1 à 16 en faisant usage du code de communication interne, comprenant les étapes suivantes :
- entrée d'un numéro d'appel ou d'identification dans l'appareil radiotéléphonique mobile (2),
- établissement d'une liaison entre l'appareil radiotéléphonique mobile (2) et le dispositif complémentaire (1), en faisant usage d'un code de communication interne, au moyen de la ou les unité(s) d'émission/réception (5) pour la communication interne,
- établissement d'une liaison entre le dispositif complémentaire (1) et un ou plusieurs appareils radiotéléphoniques mobiles (2), en particulier spécifiés par le numéro d'identification, en faisant usage du code de communication interne, au moyen de la
ou les unité(s) d'émission/réception (5) pour la communication interne.

19. Procédé pour l'établissement d'une liaison entre plusieurs dispositifs complémentaires (1) selon l'une des revendications 1 à 16, la liaison entre les dispositifs complémentaires (1) étant établie - à l'exclusion d'un réseau de radiotéléphonie mobile et/ou d'un réseau fixe
- en faisant usage d'un code de communication interne des dispositifs complémentaires (1) selon l'une des revendications 1 à 16, comprenant les étapes suivantes :
- entrée d'un numéro d'appel ou d'identification dans le dispositif complémentaire (1),
- établissement d'une liaison entre les dispositifs complémentaires (1) en faisant usage d'un code de communication interne.

20. Utilisation du dispositif complémentaire (1) selon l'une des revendications 1 à 16 dans un moyen de déplacement, en particulier une automobile, un avion, un bateau, un train ou analogue.

21. Utilisation de plusieurs dispositifs complémentaires (1) selon l'une des revendications 1 à 16 pour la construction d'un réseau local - à l'exclusion d'un réseau de radiotéléphonie mobile et/ou d'un réseau fixe - entre ces dispositifs complémentaires (1), une liaison entre ces dispositifs complémentaires (1) et des réseaux de radiotéléphonie mobile et/ou des réseaux fixes étant de préférence possible.
